# EUROPEAN PATENT APPLICATION

(11) **EP 4 848 550 A1**
(43) Date of publication of application: **02.12.2026**
(21) Application number: 25179301.4
(22) Date of filing: 28.05.2025
(51) Int. Cl.: H02M 1/00, H02M 3/00, H02M 3/335

(54) **ISOLATED LLC ASYMMETRIC HALF-BRIDGE CONVERTER WITH OUTPUT CURRENT DEPENDENT ADJUSTMENT OF OUTPUT VOLTAGE SETPOINT**

(71) Applicant: Tridonic GmbH & Co KG, 6851 Dornbirn (AT)
(72) Inventor: Schneider, Miguel Philipp, 6851 Dornbirn (AT); Lochmann, Frank, 6851 Dornbirn (AT)
(74) Representative: Rupp, Christian

(57) **Abstract**

The present invention provides an electrical power converter. Said power converter comprises a primary-side switching circuit including a high-side switch and a low-side switch connected in series between a supply voltage and ground. The power converter further comprises a resonant tank circuit and a transformer having a primary winding coupled to the resonant tank circuit and one or more secondary windings. The resonant tank circuit is coupled to a midpoint node between the high-side and low-side switches, and the transformer. Said power converter further comprises a control circuitry configured to operate the primary-side switching circuit at or near a resonant frequency of the resonant tank circuit. The control circuit is further configured to detect a parameter indicative of a secondary-side load current; and adjust a target output voltage of the electrical power converter during operation based on the detected parameter.

## Description

### TECHNICAL FIELD

The present invention relates to power electronics, particularly to intermediate bus converters (IBCs) used in switched-mode power supplies. In particular, the invention concerns control strategies and circuit architectures for LLC converters used in very high-current, low-voltage applications, such as processor and accelerator power delivery units (PDUs) in data centers, as well as other demanding environments including LED lighting systems, industrial automation, and telecommunications infrastructure.

### BACKGROUND

LLC resonant converters are widely used in switched-mode power supplies (SMPS) to efficiently convert intermediate bus voltages into low, tightly regulated output voltages with high current capability. These converters play a vital role in power delivery networks for data centers, supporting processors, graphics processing unit (GPUs), and AI accelerators that require very low output voltages (typically below 2 V) while drawing substantial output currents, often exceeding 100 A.

To achieve high efficiency under such demanding conditions, soft-switching techniques such as the LLC topology are employed. These topologies enable zero-voltage switching (ZVS), which helps reduce switching losses and suppress electromagnetic interference (EMI), especially under high current conditions. By maintaining operation near the resonant frequency of the tank circuit, LLC converters ensure effective energy transfer and efficient conversion across a range of load conditions.

However, under light-load conditions, a control challenge arises. When the output current decreases significantly-while the output voltage remains constant-the voltage losses across the transformer and rectification stage also decrease. This change is interpreted by the control loop as a shift in load, causing the switching frequency of the half-bridge to adjust, often drifting away from the resonant point.

This deviation from resonance can lead to suboptimal efficiency, as energy transfer becomes less effective and switching losses increase. Over time, frequent or unnecessary frequency adjustments may also impact system stability and control accuracy.

There is a need for improved control strategies that minimize unnecessary frequency drift and allow the converter to operate as close as possible to the resonant frequency, even under varying load conditions. Enhancing control in this way supports greater efficiency and reliability in low-voltage, high-current power systems, especially in high-density computing and data center environments.

### SUMMARY

In view of the above-discussed challenges, the invention aims to improve the performance of LLC-based power converters by minimizing deviations of the switching frequency from the resonant frequency, particularly under light-load conditions. The invention is particularly suited to high-current, low-voltage applications-such as GPU power delivery in data centers-where maintaining resonant operation across a broad load range is critical for maximizing conversion efficiency.

These and other objectives are achieved by the solution of this disclosure as described in the independent claims. Advantageous implementations are further defined in the dependent claims.

According to a first aspect of the invention, an electrical power converter is provided. Said electrical power converter comprises a primary-side switching circuit including a high-side switch and a low-side switch connected in series between a supply voltage and ground. The electrical power converter further comprises a resonant tank circuit and a transformer. The resonant tank circuit is coupled to the primary-side switching circuit and the transformer. The transformer has a primary winding coupled to the resonant tank circuit and one or more secondary windings.

Said electrical power converter further comprises a control circuitry configured to operate the primary-side switching circuit at or near a resonant frequency of the resonant tank circuit. The control circuitry is further configured to detect a parameter indicative of a secondary-side load current; and adjust a target output voltage of the electrical power converter during operation based on the detected parameter.

The invention provides an electrical power converter, particularly of the LLC type, in which the control strategy allows the converter to compensate for load-dependent voltage losses without drifting away from the resonant point, maintaining optimal soft-switching conditions and improving efficiency across a wide load range. This invention proposes dynamically adjusting the target output voltage of the LLC converter based on the measured secondary-side current, or a parameter representative of it.

According to an implementation form of the first aspect of the invention, the control circuitry is further configured to increase the target output voltage when the secondary-side current decreases.

This behavior counteracts the natural reduction in conduction losses at lower load currents, enabling the converter to "see" a consistent voltage drop and continue operating near its resonant frequency, thereby avoiding inefficient off-resonance conditions during light-load operation. When output current decreases and associated voltage losses are reduced, the target output voltage is slightly lowered in compensation. This adjustment allows the converter to maintain operation near the resonant point, improving energy transfer efficiency and reducing unnecessary frequency drift.

According to an implementation form of the first aspect of the invention, the target output voltage is adjusted within a predefined range relative to a preset target output voltage.

Advantageously, limiting the adjustment range ensures compatibility with downstream converters (e.g., buck stages), prevents excessive output voltage drift, and maintains system-level voltage compliance while still achieving resonance-preserving compensation.

According to an implementation form of the first aspect of the invention, the predefined range is less than 2%, preferably less than 1%, relative to the preset target output voltage.

This narrow adjustment window ensures the output voltage remains within the tolerances required by tightly regulated downstream circuits, while still providing sufficient compensation to maintain resonant-mode efficiency under variable load conditions.

According to an implementation form of the first aspect of the invention, the electrical power converter further comprises one or more secondary-side rectification circuits, each being connected to at least one secondary winding of the one or more secondary windings, and outputting an output voltage.

The power converter includes multiple rectification circuits on the secondary side, each associated with a respective secondary winding. The output currents are thus distributed and rectified separately. The rectification circuit completes the LLC power stage and provides a point at which output voltage can be monitored and controlled.

According to an implementation form of the first aspect of the invention, the electrical power converter further comprises a secondary-side converter stage coupled to the output of the one or more secondary-side rectification circuits.

The presence of an additional converter stage, such as a buck converter, allows for fine regulation of the output voltage and supports operation under low-voltage, high-current conditions. This also constrains the allowable range of target voltage adjustment upstream.

According to an implementation form of the first aspect of the invention, the secondary-side converter stage comprises a buck converter configured to regulate the output voltages from the one or more secondary-side rectification circuits to a defined low-voltage level.

The use of a buck converter enables the system to deliver precisely regulated low voltages (e.g., below 2 V) required by high-performance processors and accelerators, even when the LLC stage is permitted to adjust its output voltage slightly for resonant optimization.

According to a further implementation form of the first aspect of the invention, the transformer is a matrix transformer comprising a plurality of secondary windings connected in parallel.

Each secondary winding may deliver a portion of the total output current. This configuration distributes the high output current across several paths, reducing the current stress on individual components. The technical effect is a substantial improvement in thermal performance and current handling capability. It also facilitates a modular and scalable design, which is highly advantageous in data center power supplies where efficient delivery of very high currents is critical.

According to a second aspect of the invention, a method for operating an electrical power converter is provided. The power converter comprises a primary-side switching circuit, a resonant tank circuit, and a transformer. The electrical power converter may be the electrical power converter according to the first aspect or any implementation form of the first aspect.

The method comprises operating the primary-side switching circuit at or near a resonant frequency of the resonant tank circuit, detecting a parameter indicative of a secondary-side load current, and adjusting a target output voltage of the electrical power converter during operation based on the detected parameter.

This method enables the power converter to dynamically adapt its control strategy in real time based on actual load conditions. By adjusting the target output voltage in response to changes in secondary-side current, the converter compensates for variations in voltage losses that occur at different load levels. This compensation allows the system to maintain operation at or near resonance, ensuring efficient energy transfer, minimizing switching losses, and preserving soft-switching (ZVS) behavior. The method is particularly effective during light-load conditions, where conventional converters may drift away from resonance due to reduced conduction losses. Overall, this adaptive control method enhances the efficiency, stability, and performance of LLC-based power converters across a wide operating range.

According to an implementation form of the second aspect, the method may further comprise increasing the target output voltage when the secondary-side current decreases.

According to an implementation form of the second aspect, the method may further comprise adjusting the target output voltage within a predefined range relative to a preset target output voltage.

Implementation forms of the method of the second aspect may correspond to the implementation forms of the electrical power converter of the first aspect described above. The method of the second aspect and its implementation forms achieve the same advantages and effects as described above for the electrical power converter of the first aspect and its implementation forms.

According to a third aspect of the invention, a power delivery system is provided. The power delivery system comprises a load device configured to operate at a low DC voltage and high current; and an electrical power converter according to the first aspect or any implementation forms of the first aspect of the invention, wherein the electrical power converter is configured to supply power to the load device.

Optionally, the load device comprises a GPU, a lighting module, or an array of LEDs.

Optionally, the low DC voltage is below 5 V, preferably below 2 V, and the high current is more than 100 A, preferably more than 500 A, more preferably more than 1000 A.

Implementation forms of the system of the third aspect may correspond to the implementation forms of the electrical power converter of the first aspect described above. The system of the third aspect and its implementation forms achieve the same advantages and effects as described above for the electrical power converter of the first aspect and its implementation forms.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Fig. 1: shows an exemplary electrical power converter according to an embodiment of this invention.
- Fig. 2: shows timing diagrams related to the operation of the electrical power converter.
- Fig. 3: shows timing diagrams related to the operation of the electrical power converter according to an embodiment of this invention.
- Fig. 4: shows a method according to an embodiment of this invention.

### DETAILED DESCRIPTION OF EMBODIMENTS

Illustrative embodiments of an electrical power converter, a power delivery system, and a method for operating the electrical power converter are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

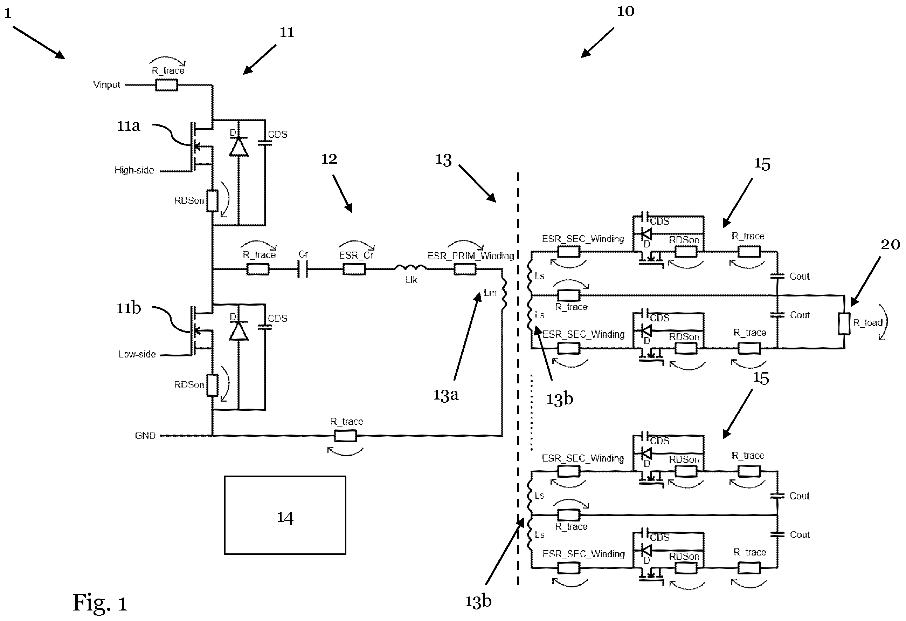

With respect to Fig. 1, an exemplary embodiment of an electrical power converter 10 is illustrated. This converter is based on a half-bridge LLC resonant topology and is configured to efficiently deliver high output current at low output voltage, particularly for applications such as GPU power delivery in data centers or AI accelerator platforms. The electrical power converter 10 comprises a primary-side switching circuit 11, a resonant tank circuit 12, a transformer 13, and a control circuitry 14.

The primary-side switching circuit 11 includes a high-side switch 11a and a low-side switch 11b connected in series between a supply voltage (Vinput) and ground.

The resonant tank circuit 12 is coupled to the switching circuit and a primary winding 13a of the transformer 13. The resonant tank circuit 12 may include one or more inductive and capacitive components arranged to establish resonant conditions during operation, for instance, a resonant capacitor Cr, a resonant inductor Llk and a magnetization inductor Lm. The resonant tank circuit 12 may also comprise associated parasitic elements including capacitor ESR (ESR_Cr) and trace resistance (R_trace). These components are depicted by way of example to illustrate typical sources of voltage drop within the converter. The resonant tank is designed to define a resonant frequency at which the converter operates with soft-switching behavior (typically near zero-voltage switching, ZVS).

The transformer 13 includes a primary winding 13a coupled to the output of the resonant tank circuit 12, and one or more secondary windings 13b coupled to downstream rectification stages on the secondary side. Possibly, the inductor Lm can be formed by or connected to the primary winding 13a of the transformer 13.

A control circuit 14 is provided to manage the operation of switches. While not shown in detail in Fig. 1, the control circuitry 14 is configured to drive the high-side and low-side switches with a switching pattern that maintains operation at or near the resonant frequency of the resonant tank. The control circuitry 14 may be implemented using analog or digital control logic, microcontrollers, gate driver ICs, or a combination thereof. The specific arrangement and signal pathways are omitted for clarity and may vary depending on implementation, but would be understood by a person skilled in the art. The invention is not limited to any particular control circuit layout.

Importantly, the control circuitry 14 is further configured to detect a parameter indicative of the load current (e.g., via sensing secondary current or other indirect parameters), and dynamically adjust a target output voltage in response. This adjustment compensates for changing conduction losses that occur with varying load conditions, particularly at light load, allowing the converter to remain in resonance and avoid efficiency losses due to frequency drift.

In particular, the control circuitry 14 increases the target output voltage as the secondary-side current decreases. This behavior counteracts the natural reduction in conduction losses at lower load currents, enabling the converter 10 to "see" a consistent voltage drop and continue operating near its resonant frequency, thereby avoiding inefficient off-resonance conditions during light-load operation.

In one embodiment, the transformer 13 may preferably be implemented as a matrix transformer. The transformer 13 may comprise a plurality of secondary windings 13b connected in parallel. These secondary windings 13b are configured to supply a rectified output voltage Vout at high current and low voltage. For instance, each secondary winding 13b may be connected to an individual secondary-side rectifier circuit 15, which provides a regulated output voltage at high current and low voltage.

For instance, in GPU power systems, "low DC voltage and high current" may mean supply voltages in about 1-2 V range, with currents from 50 A up to 600 A+, depending on load and system design.

The transformer 13 may comprise at least one primary winding 13a. The primary winding 13a of the transformer 13 could be formed by a single winding or multiple winding elements, which are connected in series. The at least one primary winding 13a can be magnetically coupled to the plurality of secondary windings 13b, i.e., to each of the plurality of secondary windings.

In preferred embodiments, the transformer 13 is designed with a winding ratio between the primary and secondary windings that is substantially one-to-one, thereby enabling efficient high-current transfer. However, also other winding ratios between primary and secondary windings are possible.

In one embodiment, each secondary-side rectification circuit 15 includes synchronous rectifiers (e.g., MOSFETs with body diodes and output capacitance), filtering capacitors C_out, and associated parasitics such as ESRs, trace resistances, and winding ESRs (ESR_SEC_Winding). These circuits are connected to form one or more regulated DC outputs. In the illustrated embodiment, multiple rectifiers are shown operating in parallel to supply a high-current, low-voltage load 20, represented by R_load.

In some embodiments, an additional downstream converter stage, such as a buck converter, may be connected to the output of the secondary-side rectification circuits 15. Although not shown in Fig. 1, such a stage may be used to tightly regulate the final output voltage, particularly in systems requiring very low output voltages (e.g., below 2 V) at high output currents. In these configurations, the adjustment of the LLC output voltage must remain within a defined window compatible with the input range of the downstream stage.

In this invention, the adjustment of the target output voltage occurs within a predefined range relative to a preset value. For instance, the predefined range may be less than 2%, and preferably less than 1%, relative to the preset target output voltage. Limiting the adjustment range ensures compatibility with downstream converters (e.g., buck stages), prevents excessive output voltage drift, and maintains system-level voltage compliance while still achieving resonance-preserving compensation.

In some embodiments, the target output voltage is adjusted by applying a compensation function to adjust the target output voltage based on the load level. The adjustment accounts for the reduced conduction losses at partial load by restoring a portion of the voltage drop that would normally occur at full load. The compensated voltage can be calculated, for example: ${Vout}_{compensated} = {Vout}_{nom} + \left({Voltage}_{losses}-\left({Voltage}_{losses}∗\frac{X%Load}{100 %}\right)\right) ,$ where *Voutₙₒₘ* is the nominal output voltage at full load, *Voltageₗₒₛₛₑₛ* represents the cumulative conduction losses in the output stage (e.g., from PCB traces, transformer windings, and switching devices), and *X*%*Load* is the measured or estimated load level as a percentage of the maximum. This calculation allows the system to maintain resonant-frequency operation by adapting the voltage setpoint upward as load decreases, without the need to increase switching frequency.

The electrical power converter 10 can be used for power delivery to a CPU, a GPU, or another component with a high power demand, e.g., in a datacenter environment.

It may be understood that Fig. 1 also shows a power delivery system 1 comprising a load device 20 configured to operate at a low DC voltage and high current, and the electrical power converter 10. Possibly, the low DC voltage is below 5 V, preferably below 2 V, and the high current is more than 100 A, preferably more than 500 A, more preferably more than 1000 A.

In various embodiments, the load device 10 may include, but is not limited to, a GPU in a server or data center, an industrial computing module, or a lighting system such as an LED array, luminaire, or ballast.

As shown in Fig. 1, various sources of loss are modeled throughout the system, including trace resistances, switching device on-resistances (RD_Son), capacitor equivalent series resistance (ESR), and winding resistances on both the primary and secondary sides. These components are depicted by way of example to illustrate typical sources of voltage drop within the converter. In practice, the exact configuration and location of loss elements may vary depending on layout, component selection, and converter architecture. The presence of such losses results in a load-dependent voltage drop, which the control strategy of the present invention compensates for by adaptively adjusting the target output voltage to maintain efficient resonant operation.

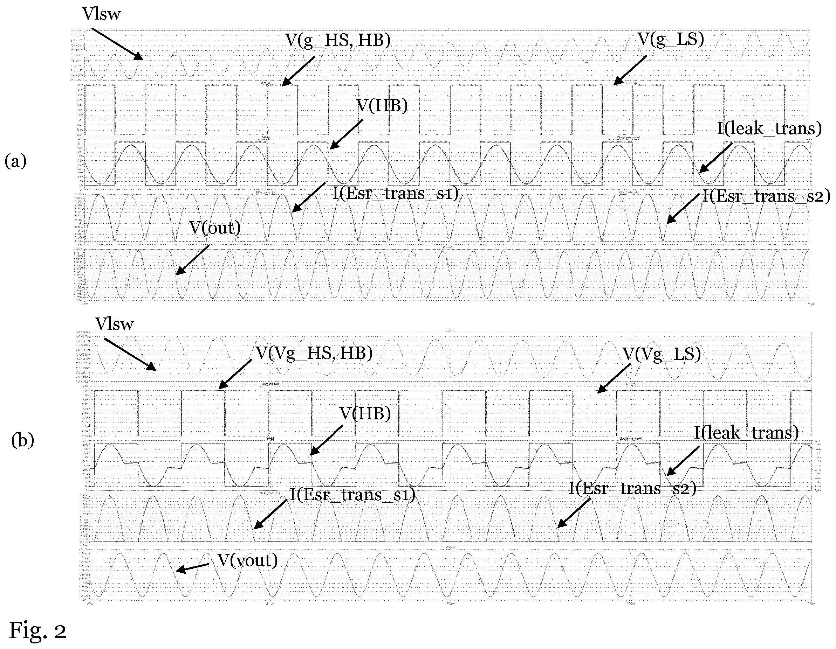

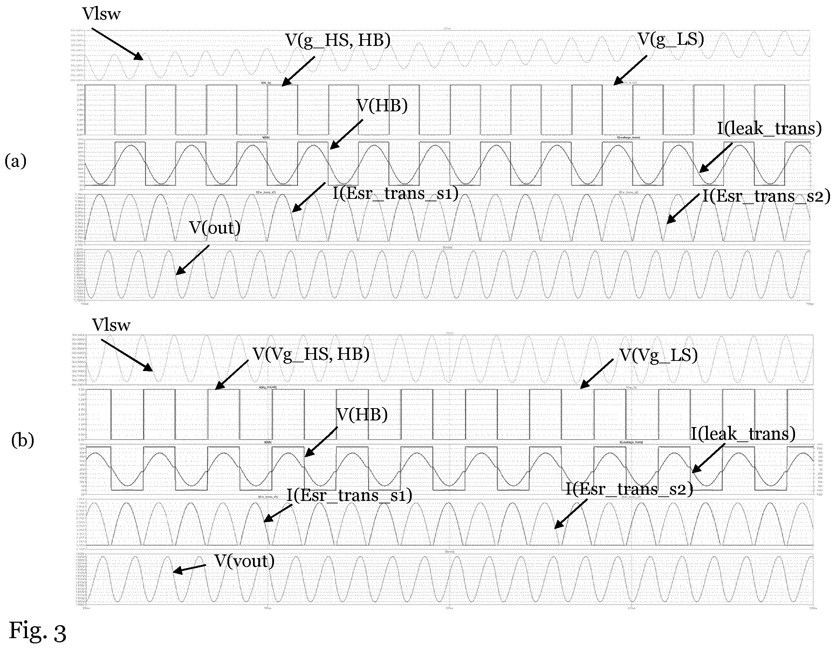

Figures 2 and 3 illustrate the time-domain behavior of the electrical power converter 10 shown in Fig. 1, under different load conditions and control scenarios. These figures help demonstrate the technical effect of the invention - maintaining resonant operation and high efficiency by adjusting the target output voltage in response to load-dependent loss variations.

Fig. 2 shows simulated or measured waveforms from the converter in Fig. 1 when operated at: 100% load (Fig. 2(a)) and 80% load without voltage loss compensation (Fig. 2(b)), with input voltage Vin = 52 V in both cases.

Key waveforms shown include:
V(g_HS) and V(g_LS): Gate drive signals for the high-side switch 11a and low-side switch 11b, respectively. These are alternated with a fixed on-time and a brief deadtime.
I(leak_trans): Current through the transformer leakage inductance, showing smooth resonant transitions.
V(out): Output voltage.

At 100% load, the converter operates close to its designed resonant frequency. The switching frequency is constant, the resonant current waveform is symmetrical and sinusoidal, and the midpoint node exhibits expected soft-switching behavior. The output voltage maintains a stable average of 1.8 V.

At 80% load, in the absence of the compensation mechanism, the average output voltage is still regulated to 1.8 V. However, due to lower load current, conduction losses across secondary elements (as shown in Fig. 1: ESR_SEC_Winding, R_trace, RDSon, etc.) decrease. This leads to reduced overall voltage drop, which the converter's control loop interprets as a change in load impedance. In response, the controller increases the switching frequency, moving the operating point away from resonance.

As shown in the Fig. 2(b), the resonant current becomes less sinusoidal, magnetizing current increases, causing stress on components. Therefore, efficiency drops due to increased switching losses and suboptimal energy transfer.

Fig. 3 depicts the same converter under the same load conditions as Fig. 2, but with the compensation mechanism of the present invention activated at 80% load (Fig. 3(b)).

At 100% load, the waveforms are identical to those in Fig. 2 - confirming baseline performance.

At 80% load with compensation, the control circuit 14 detects the reduced load current (e.g., via current sensing or correlated parameter), and slightly increases the target output voltage - in this example, from 1.80 V to 1.816 V. This voltage increase offsets the reduction in voltage drop due to lower conduction losses. As a result, the perceived load remains "constant" from the controller's perspective, and the converter continues to operate at or near its resonant frequency.

In the compensated 80% load waveform (Fig. 3(b), the switching frequency remains stable, closely matching the 100% load condition. The resonant current waveform is well-shaped and sinusoidal, ZVS is maintained, reducing switching losses. Overall system efficiency improves significantly compared to the uncompensated case.

This behavior validates the effectiveness of the invention described in connection with Fig. 1: by dynamically adjusting the target output voltage within a predefined range, the converter maintains efficient operation across varying load levels without requiring frequency modulation that could disrupt resonant behavior.

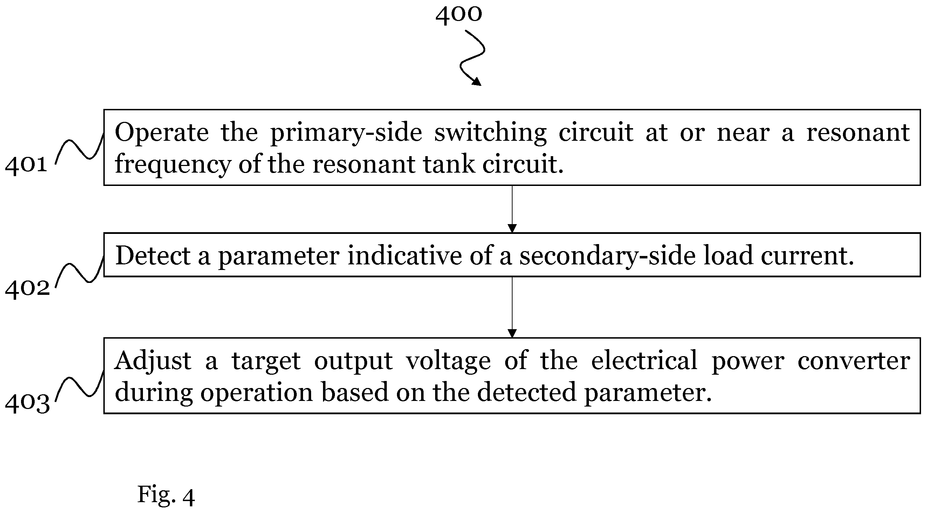

Fig. 4 illustrates a flowchart representing an embodiment of the method 300 for operating the electrical power converter 10 according to the invention. The electrical power converter 10 may be the electrical power converter described in the previous embodiments, as shown in Fig. 1, and operated in accordance with the control strategies illustrated in Fig. 3 (particularly Fig. 3(b)).

This method enables adaptive control of the LLC converter's output voltage in response to changing load conditions. It is specifically designed to maintain the converter's operation at or near the resonant frequency of the resonant tank circuit across a wide range of output loads, thereby improving efficiency and soft-switching conditions.

The method comprises a step 401 of operating the primary-side switching circuit 11 at or near a resonant frequency of the resonant tank circuit 12.

In step 401, the control circuit 14 operates the primary-side switching circuit 11, comprising the high-side switch 11a and low-side switch 11b, at or near the resonant frequency of the resonant tank circuit 12. This involves generating alternating drive signals to the gate terminals of the switches to produce a periodic switching waveform at the half-bridge midpoint node.

Operating near the resonant frequency allows the converter to take advantage of ZVS and low magnetizing current, which are key to achieving high efficiency and reducing switching losses.

The method comprises a step 402 of detecting a parameter indicative of a secondary-side load current. This may be a direct current measurement, a sensed voltage across a current-sense element (e.g., a shunt or R_trace), or an inferred value from controller feedback variables.

The goal is to obtain a reliable indicator of how much current the output stage is delivering, since this current directly affects voltage losses across conduction paths - such as winding resistances, MOSFET RDSon, ESR in filter components, and PCB traces - as modeled in Fig. 1.

In step 403, the control circuitry 14 adjusts the target output voltage of the electrical power converter 10 during operation based on the detected parameter from step 402.

As load current decreases, the voltage losses in the output stage also decrease. To maintain consistent resonant-mode power transfer, the control circuitry 14 slightly increases the target output voltage, offsetting the smaller conduction drop and preserving the load line as seen by the resonant network.

For example, as demonstrated in Fig. 3, the output voltage may be adjusted from 1.800 V to 1.816 V under 80% load. This small adjustment allows the converter to maintain the same switching frequency - aligned with the resonant frequency - even though the actual load has changed. The magnitude of this adjustment may be limited to a predefined range (e.g., less than 2%, more preferably less than 1%) to stay within downstream converter input tolerances.

The method of Fig. 4 enables real-time adaptation of the LLC converter to changing load conditions, without requiring substantial deviation from the resonant frequency. This results in:
- Consistently high efficiency across light and heavy loads,
- Preserved soft-switching conditions (ZVS),
- Reduced stress on switching devices and magnetics,
- Improved thermal and power delivery behavior, particularly in high-current, low-voltage applications like GPUs and AI accelerators.

The foregoing description has presented exemplary embodiments of an electrical power converter and its method of operation, particularly suited for high-current, low-voltage applications such as GPU power delivery in data centers, where typical output voltages range from 1 V to 2 V with substantial current demands. Central to the invention a load-adaptive control strategy in which the target output voltage of the LLC converter is dynamically adjusted in response to changes in secondary-side load current. By compensating for load-dependent voltage losses-such as those caused by resistive drops in windings, rectifiers, and circuit traces-the converter maintains operation at or near its resonant frequency. This ensures efficient energy transfer and preserves soft-switching conditions (ZVS) across a broad range of operating loads, including light-load scenarios where conventional converters may suffer from increased switching losses due to frequency drift.

Although the invention has been described with reference to specific components such as an LLC resonant topology, matrix transformer configurations, and particular timing control schemes, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their legal equivalents.

For example, the control strategy may be implemented through different sensing or measurement methods, and the converter may be adapted for other applications, including LED lighting, telecommunications, or industrial systems. The transformer configuration, winding ratios, and rectification topologies may also be varied to meet different system requirements.

In addition, while a particular feature of the invention may have been disclosed with respect to only one of several implementations, such feature may be combined with one or more other features of the other implementations as may be desired and advantageous for any given or particular application.

## Claims

1. An electrical power converter (10) comprising:
a primary-side switching circuit (11) including a high-side switch (11a) and a low-side switch (11b) connected in series between a supply voltage and ground,
a resonant tank circuit (12) coupled to the primary-side switching circuit (11) and a transformer (13),
the transformer (13) having a primary winding (13a) coupled to the resonant tank circuit (12) and one or more secondary windings (13b), and
a control circuitry (14) configured to operate the primary-side switching circuit (11) at or near a resonant frequency of the resonant tank circuit (12),
wherein the control circuit (14) is further configured to:
detect a parameter indicative of a secondary-side load current; and
adjust a target output voltage of the electrical power converter (10) during operation based on the detected parameter.

2. The electrical power converter (10) according to claim 1, wherein the control circuit (14) is further configured to increase the target output voltage when the secondary-side current decreases.

3. The electrical power converter (10) according to claim 1 or 2, wherein the target output voltage is adjusted within a predefined range relative to a preset target output voltage.

4. The electrical power converter (10) according to claim 3, wherein the predefined range is less than 2%, preferably less than 1%, relative to the preset target output voltage.

5. The electrical power converter (10) according to any one of the preceding claims, further comprising:
one or more secondary-side rectification circuits (15), each being connected to at least one secondary winding (13b) of the one or more secondary windings (13b), and outputting an output voltage.

6. The electrical power converter (10) according to claim 5, further comprising a secondary-side converter stage coupled to the output of the one or more secondary-side rectification circuits (15).

7. The electrical power converter (10) according to claim 6, wherein the secondary-side converter stage comprises a buck converter configured to regulate the output voltages from the one or more secondary-side rectification circuits (15) to a defined low-voltage level.

8. The electrical power converter (10) according to any one of the preceding claims, wherein the transformer (13) is a matrix transformer comprising a plurality of secondary windings (13b) connected in parallel.

9. A method (400) for operating an electrical power converter (10) comprising a primary-side switching circuit (11), a resonant tank circuit (12), and a transformer (13), the method (400) comprising:
operating (401) the primary-side switching circuit (11) at or near a resonant frequency of the resonant tank circuit (12),
detecting (402) a parameter indicative of a secondary-side load current, and
adjusting (403) a target output voltage of the electrical power converter (10) during operation based on the detected parameter.

10. The method (400) according to claim 9, further comprising:
increasing the target output voltage when the secondary-side current decreases.

11. The method (400) according to claim 9 or 10, further comprising:
adjusting the target output voltage within a predefined range relative to a preset target output voltage.

12. A power delivery system (1) comprising:
a load device (20) configured to operate at a low DC voltage and high current; and
an electrical power converter (10) according to any one of claims 1 to 7, wherein the electrical power converter (10) is configured to supply power to the load device (20).

13. The power delivery system (1) according to claim 12, wherein the load device (20) comprises a graphics processing unit, a lighting module, or an array of LEDs.

14. The power delivery system (1) according to claim 12 or 13, wherein the low DC voltage is below 5 V, preferably below 2 V, and the high current is more than 100 A, preferably more than 500 A, more preferably more than 1000 A.
